Europäisches Patentamt

European Patent Office

Office européen des brevets

(11) Numéro de publication: **0 011 033**
**A1**

## (12) DEMANDE DE BREVET EUROPEEN

(21) Numéro de dépôt: 79400801.1

(22) Date de dépôt: 26.10.79

(51) Int. Cl.³: **H 01 G 4/30**

(30) Priorité: 31.10.78 FR 7830854

(43) Date de publication de la demande: 14.05.80
**Bulletin 80/10**

(84) Etats contractants désignés: **DE GB IT**

(71) Demandeur: **L.C.C.-C.I.C.E. - COMPAGNIE EUROPEENNE DE COMPOSANTS ELECTRONIQUES, 36, avenue Galliéni, F-93170 Bagnolet (FR)**

(72) Inventeur: **Bernard, Daniel, "THOMSON-CSF" - SCPI 173, bld Haussmann, F-75360 Paris Cedex 08 (FR)**

(74) Mandataire: **Favre, Maurice et al, "THOMSON-CSF" - SCPI 173, bld Haussmann, F-75360 Paris Cedex 08 (FR)**

(54) **Condensateur électrique feuilleté à armatures planes, et procédé de fabrication d'un tel condensateur.**

(57) L'invention se rapporte aux condensateures à structure feuilletée à armatures planes.

Les contacts avec les deux groupes d'armatures, pair et impair, y sont habituellement faits par un dépôt métallique (22) réalisé par projection, lors de la fabrication, sur deux faces latérales opposées, et, dans le cas où la fabrication en est assurée par empilage d'étages successifs de condensateurs $(n-1)$ $n+1$ séparés par des couches de finition (20), le dépôt métallique s'oppose, au niveau de celle-ci, à une séparation aisée des étages en fin de fabrication. Selon l'invention, on fractionne le dépôt par un décalage mutuel (P) de chaque étage, parallèlement au plan des couches de finition, et les bords de celles-ci peuvent être munis de reliefs d'accrochage.

Les applications sont notamment celles du domaine des condensateurs à diélectrique plastique du type «pavé».

# 0011033

1

## CONDENSATEUR ELECTRIQUE FEUILLETE A ARMATURES PLANES, ET PROCEDE DE FABRICATION D'UN TEL CONDENSATEUR.

La présente invention se rapporte au domaine des condensateurs pour circuits électroniques, et particulièrement à ceux constitués d'une superposition alternée de couches respectivement conductrices et diélectriques planes, les couches conductrices étant connectées en parallèle en deux groupes d'ordre respectivement pair et impair ; de tels condensateurs sont fréquemment désignés en pratique, sous le nom de condensateurs "pavés", terme qui par voie de simplification sera utilisé ci-après.

La structure de ces condensateurs se présente ainsi sous la forme d'un empilage feuilleté, dont les deux faces terminales extrêmes sont recouvertes chacune d'une feuille ou plaquette de finition assurant leur protection mécanique et électrique, et deux faces latérales opposées portent respectivement des moyens de connexion en parallèle des deux groupes, pair et impair, de couches conductrices constituant des armatures du condensateur.

Pour un raccordement des connexions plus aisé, les armatures d'un même groupe font saillie sur une seule des deux faces latérales, et un moyen de connexion connu consiste dans un dépôt métallique effectué sur chacune des deux faces latérales, dépôt réalisé par projection à chaud du métal désiré, sous forme de gouttelettes en fusion ; ce procédé, ainsi que le dépôt métallique obtenu, sera désigné dans toute la suite sous le terme de "schoopage" pour simplification, terme dérivé du nom du procédé "Schoop".

Les deux dépôts métalliques réalisés sur les faces latérales constituent ainsi les bornes du condensateur pavé.

En vue d'une fabrication industrielle en grande série, il a depuis longtemps été mis en oeuvre des procédés où une pluralité de condensateurs est réalisée par superposition, en étages, d'empilages feuilletés, périodiquement divisés par des feuilles ou plaquettes de finition délimitant chaque condensateur individuel dans la superposition ; un sectionnement, au niveau des plaquettes de finition, parallèlement au plan des armatures, permet d'obtenir les condensateurs individuels.

D'autres procédés ont été mis en oeuvre où une pluralité de condensateurs est obtenue par réalisation d'un empilage unique de grande longueur, suivi d'une division en condensateurs individuels par sectionnement de l'empilage perpendiculairement au plan des armatures.

Un mode de mise en oeuvre particulièrement avantageux de ce dernier procédé consiste à effectuer l'empilage unique sur le pourtour extérieur ou "jante", d'une roue circulaire, de grand diamètre devant les dimensions des condensateurs, et dont la courbure peut ainsi être d'influence négligeable.

Enfin, suivant un autre procédé découlant de façon évidente des deux précédents, il a été proposé d'associer ceux-ci, en effectuant une pluralité d'empilages en étages suivant le premier procédé, et cela sur la périphérie d'une roue de grand diamètre suivant le second procédé.

Cependant, les procédés d'empilages en étages soulèvent un difficile problème, lié à la réalisation, par des couches de schoopage, des prises de contact électrique sur les faces latérales.

En effet, les couches de schoopage sont déposées uniformément sur les deux faces latérales du bloc à étages constituant la pluralité des empilages ; et l'étape finale de séparation des condensateurs de chaque étage, au niveau des feuilles de finition, rencontre la grande difficulté du sectionnement des couches de schoopage à leur niveau. Ces dépôts très compacts ont une bonne résistance mécanique, et la séparation des condensateurs s'accompagne d'un risque sérieux d'arrachage ou de rupture soit de certaines armatures, soit des couches de schoopage elles-mêmes.

Pour tenter de résoudre ce problème, il a été proposé de mettre temporairement en place au cours de la fabrication, à chaque étage, au niveau des feuilles de finition qui les délimitent, une cloison supplémentaire largement débordante sur les faces latérales du bloc et dont la fonction est d'interrompre la continuité de la couche de schoopage.

Mais l'utilisation de telles cloisons intercalaires, réalisées par exemple en acier, présente, comme on le montre plus loin en détail, d'importants inconvénients industriels de mise en oeuvre, conduisant à des coûts de fabrication élevés.

Le procédé de fabrication selon la présente invention apporte une solution au problème de la séparation des condensateurs superposés sans présenter ces inconvénients. Il ne nécessite la mise en oeuvre d'aucun moyen supplémentaire, temporaire ou définitif, tel que les cloisons intercalaires de l'art connu, et procure cependant la délimitation précise des couches de schoopage appartenant à chaque condensateur. Il fait appel à une disposition géométrique particulière de chaque étage dans le bloc feuilleté, facile et économique à mettre en oeuvre en fabrication.

Un deuxième problème, également lié à l'utilisation du procédé de schoopage, existe dans la fabrication des condensateurs pavés. Il est relatif à la fixation robuste ou "ancrage", des deux couches latérales du dépôt de schoopage sur les plaquettes de finition du condensateur. Cet ancrage est en effet essentiel, les efforts mécaniques exercés sur les couches en fabrication lors de la séparation des condensateurs, et ceux éventuellement exercés en service sur les bornes du condensateur ne devant en aucun cas être transmis aux armatures internes de celui-ci, mais uniquement aux couches ou plaquettes de finition externes sans rôle électrique.

Pour résoudre le problème de l'ancrage des couches de schoopage, il a été proposé de superposer les couches de finition suivant une disposition où leurs bords externes sont alternativement décalés dans leur plan, conduisant à la réalisation de contours qui, vus transversalement, en section perpendiculaire à ce plan, sont en forme de crémaillère.

Cependant, comme on le montrera plus loin en détail, la mise en oeuvre, en fabrication industrielle, de telles couches à bords décalés, que ce décalage soit obtenu par bobinage décalé de deux couches de même largeur, ou par bobinage de deux couches de largeur différente, présente les graves inconvénients de la complication des équipements, et des opérations pratiques associées.

Le procédé de fabrication de condensateurs pavés selon la présente invention ne présente pas cette deuxième catégorie d'inconvénients.

Il ne nécessite la mise en place que d'un seul type de couche de finition, selon un mode opératoire simple et économique, à savoir, suivant un des modes de réalisation de l'invention, un simple enroulement, selon une ou plusieurs couches successives superposées, le contour d'ancrage recherché en forme de crémaillère, étant alors longitudinal, et ainsi préalablement réalisé avant l'enroulement.

C'est cette caractéristique fondamentale qui fait différer la présente invention des procédés de l'art connu, où les contours d'ancrage en forme de crémaillère sont transversaux, et réalisés par bobinage en cours de fabrication, avec tous les inconvénients signalés.

Plus précisément, l'invention concerne un condensateur électrique du type "pavé" en forme de parallélépipède, avec deux faces principales, auxquelles sont parallèles d'une part un empilage respectivement alterné de couches conductrices constituant les armatures, et de couches isolantes constituant les diélectriques, et d'autre part deux plaquettes de finition externes, caractérisé en ce qu'il comporte des moyens de connexion à haute résistance mécanique, pour le raccordement en parallèle des armatures suivant deux groupes, moyens constitués par deux couches métalliques de connexion, déposées sur deux autres faces parallèles et sur les bord correspondants des plaquettes de finition, ces bords portant des reliefs d'accrochage en forme de crémaillère orientés parallèlement aux faces principales.

L'invention sera mieux comprise à l'aide de la description ci-après, en s'appuyant sur les figures annexées, où :

- la figure 1 représente, suivant une vue schématique en perspective, un dispositif connu de fabrication de condensateurs,

- La figure 2 représente, suivant une vue en coupe, une succession connue d'étages de condensateurs obtenue avec le dispositif de la figure 1,

- la figure 3 représente, suivant une vue en coupe, une succession d'étages de condensateurs obtenue par mise en oeuvre du procédé selon l'invention,

- la figure 4 représente, suivant des variantes (a) (b) (c) (d), (e), des couches de finition selon l'invention,

- la figure 5 représente un autre mode de réalisation des couches de finition,

- la figure 6 représente une variante avantageuse du mode de la figure 5,

- la figure 7 représente, une étape de fabrication supplémentaire avantageuse, liée au mode de réalisation de la figure 6.

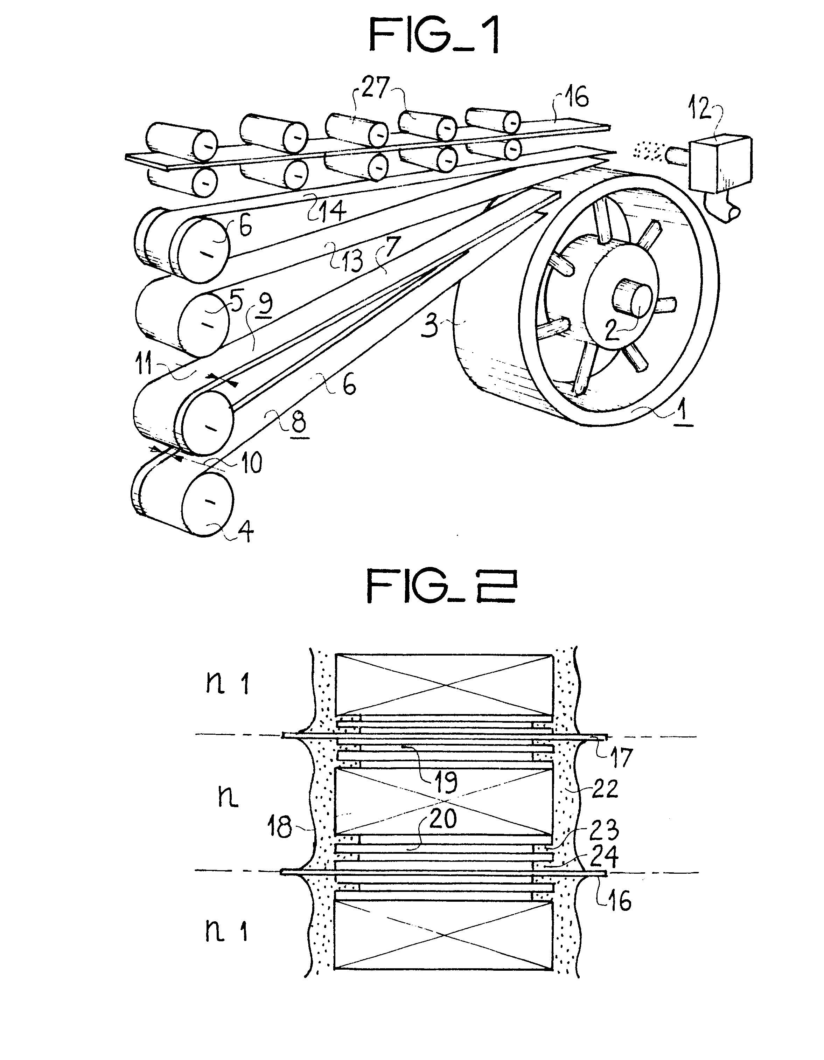

La figure 1 représente, suivant une vue schématique en perspective, un dispositif de fabrication de condensateurs pavés mettant en oeuvre un procédé connu, qui sera désigné ci-après comme "procédé de la roue".

Il comporte une roue 1, pouvant tourner sur son axe 2, et dotée d'une jante extérieure 3 en forme de cylindre. Sur cette jante peuvent être enroulés des bandes ou "films" représentant les différentes parties d'un condensateur, à partir de bobines telles que 4, 5 sur lesquelles elles sont emmagasinées.

Les deux armatures du condensateur sont constituées de deux couches métalliques 6 et 7, directement supportées par deux films diélectriques 8 et 9.

Lors de la fabrication, la roue 1 est mise en rotation et on lui fait exécuter un certain nombre de tours, provoquant la superposition successive de paires de couches ; la rotation de la roue est arrêtée lorsque la capacité électrique désirée est atteinte.

Les armatures occupant respectivement un rang pair et un rang impair doivent ensuite être connectées en parallèle, et pour une réalisation facile de ces deux raccordements, les couches métalliques représentant les armatures sont respectivement décalées latéralement, comme représenté en 10 et 11. Il est alors aisé de procéder au raccordement simultané de toutes les couches de même rang, par projection d'une couche métallique suivant un procédé connu sous le nom de schoopage, sur les surfaces latérales de l'empilage réalisé sur la jante de la roue ; c'est la fonction du dispositif de schoopage représenté par 12, et connu sous le nom de "pistolet".

En pratique, avant et après le bobinage du condensateur lui-même, des couches supplémentaires électriquement non actives sont bobinées pour la protection mécanique et électrique du condensateur. Ces couches de finition sont représentées sur la figure 1 par les films 13 et 14, et sont fournies par les bobines 5 et 6.

Après réalisation d'un premier étage de condensateurs, il est connu, ainsi qu'il a été déjà indiqué plus haut, d'en réaliser une pluralité, par superpositions successives ; dans ce cas, les dépôts latéraux de schoopage ne sont effectués qu'après la fin de ces opérations de superposition, ce qui conduit à des couches de schoopage continues, rendant solidaires les différents étages, et s'opposant à leur séparation aisée.

C'est pourquoi il a été proposé d'intercaler, entre chaque étage, une cloison de séparation 16, par exemple en acier, assurant la division des couches de schoopage au niveau des couches de finition. Cette cloison peut avoir une épaisseur grande devant celle des autre films dont est constitué le condensateur-pavé, et est mise en place sur la jante 3 de la roue par un dispositif d'alimentation à galets tels que 17. Elle permet la séparation des différents étages, dont les dépôts de schoopage ne sont plus continus, chaque étage se présentant, après élimination de la cloison, sous la forme d'un anneau.

L'obtention des condensateurs-pavés individuels se fait ensuite par découpage transversal des anneaux, perpendiculairement à leurs plan, selon des longueurs déterminées en fonction des valeurs des capacités désirées.

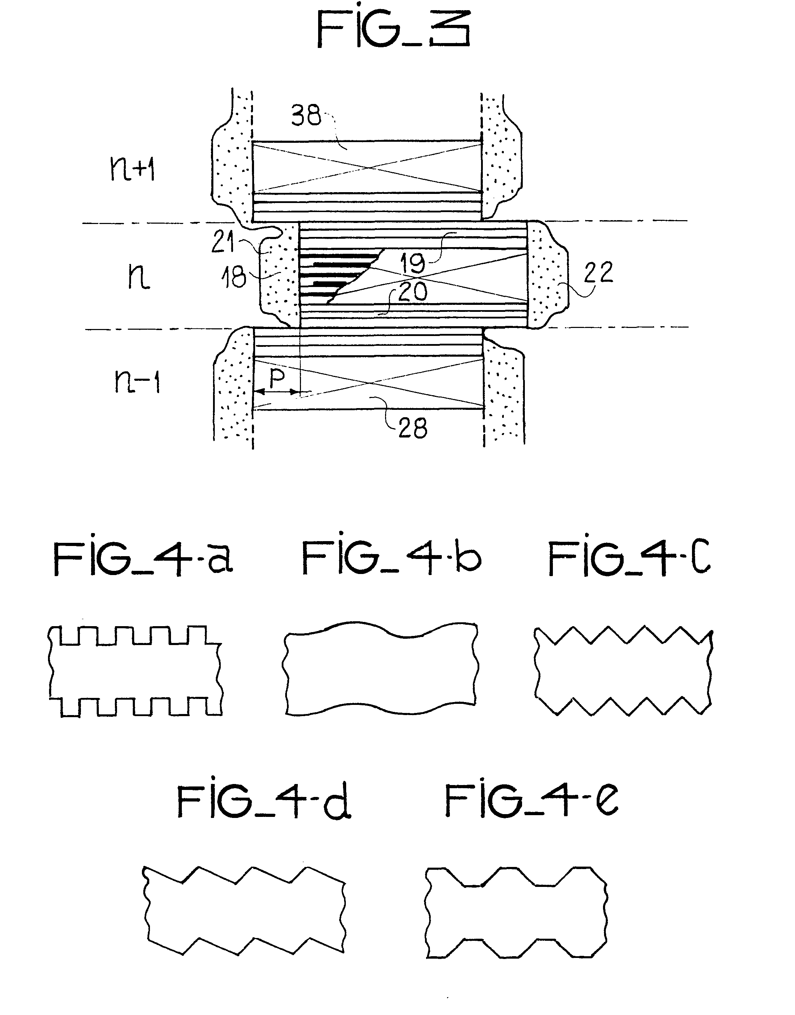

La figure 2 représente, suivant une vue en coupe, une succession d'étages de condensateurs obtenue par mise en oeuvre connue du dispositif de la figure 1, étages repérés par les symboles (n - 1), (n) et (n + 1).

Entre chaque étage de condensateurs sont insérées les cloisons coupe-schoopage telles que 16 et 17. La partie active de chaque étage 18 est encadrée par des couches de finition telles que 19 et 20, alternativement décalées latéralement pour constituer, radialement, une surface d'ancrage en crémaillère pour les dépots de schoopage, tels que 21 et 22, qui pénètrent dans les fentes annulaires 23 et 24 réalisées par les décalages des couches de finition.

Un tel ancrage est d'importance fondamentale dans le procédé connu, car il est nécessaire de s'opposer aux risques sérieux d'entraînement des couches de schoopage restées adhérentes aux cloisons coupe-schoppage lors de l'élimination de celles-ci.

La réalisation d'un étage quelconque exige la mise en oeuvre d'un matériel important. Il faut disposer d'une machine d'enroulement constituée principalement :

- d'une roue de grand diamètre, démontable, entraînée en rotation,

- de deux bobines, ou dévidoirs, au moins, supportant les films de plastique métallisé,

- de deux bobines ou dévidoirs, au moins, supportant les films de plastique non métallisé destinés aux couches séparatrices de finition,

- d'un système de distribution des couches intercalaires coupe-schoopage en métal, destinées à la séparation circonférentielle.

Le procédé comporte les étapes suivantes :

a) aligner une première feuille de plastique non métallisé vis-à-vis de la roue ;

b) lorsque celle-ci est parfaitement alignée, la coller en un point sur la roue et couper l'excédent ;

c) aligner une deuxième feuille de plastique non métallisé vis-à-vis de la première ; celle-ci peut être soit de même largeur que la précédente, mais décalée dans le sens de la largeur vis-à-vis de la première, soit de largeur différente de la première, mais alors axée sur celle-ci ;

d) lorsque cette deuxième couche est en place, la coller sur la première et couper l'excédent ;

e) enrouler simultanément ces deux couches distinctes durant un nombre de tours prédéterminé (environ 5 tours). Cela constitue les couches dites de finition ;

f) arrêter la rotation de la roue. Coller la première couche sur le tour inférieur et la couper. Coller la deuxième couche sur la première et la couper ;

g) aligner le premier film métallisé vis-à-vis d'un des bords extérieurs des couches de finition déjà enroulées ;

h) lorsque celui-ci est aligné, le coller sur la couche de finition apparente et couper l'excédent ;

i) aligner le deuxième film métallisé vis-à-vis de l'autre bord extérieur des couches de finition déjà enroulées ;

j) lorsque celui-ci est aligné, le coller et couper l'excédent ;

k) enrouler simultanément ces deux films métallisés distincts, durant un nombre de tours prédéterminé, fonction de la valeur du condensateur à réaliser ;

l) arrêter la rotation de la roue. Coller le premier film et le couper. Coller le deuxième film et le couper ;

m) aligner à nouveau la première couche de plastique non métallisé sur l'un des bords extérieurs de l'empilement déjà constitué. Lorsque celle-ci est alignée, la coller et couper l'excédent ;

n) aligner à nouveau la deuxième couche de plastique non métallisé avec l'autre bord de l'empilement déjà constitué. Lorsque celle-ci est alignée, la coller et couper l'excédent ;

o) procéder comme à l'étape (e) ;

p) arrêter la rotation de la roue et introduire à vitesse très lente la couche intercalaire coupe-schoopage en métal ;

q) comme en (a), et recommencer des cycles complets jusqu'à constituer dix à vingt empilements successifs.

Ce procédé est très lourd, et la cadence de production est faible, car il faut sans cesse arrêter la rotation de la roue, et surtout coller, couper et réaligner les films, d'où des coûts élevés de main d'oeuvre, des pertes de temps et de matières premières importantes.

La figure 3 représente, suivant une vue en coupe, une succession d'étages de condensateurs obtenue par mise en oeuvre du procédé selon l'invention.

Ces trois étages repérés (n - 1),(n) et (n + 1), comportent les condensateurs proprement dits tels que 18, 28 et 38 et les couches de finition telles que 19 et 20.

Cependant, selon une caractéristique fondamentale de l'invention, deux étages adjacents tels que (n) et (n + 1) sont décalés latéralement dans leur totalité, y compris leurs couches de finition, d'une longueur P.

C'est ce décalage, comme on va le montrer ci-après, qui autorise une séparation aisée des étages successifs après après le dépôt de la couche de schoopage, sans nécessiter de moyens particuliers tels que les cloisons supplémentaires de l'art connu.

En effet, les particules de métal liquide émises par le pistolet de schoopage, dont la direction de l'axe d'émission est perpendiculaire à la surface latérale du bloc à étages des condensateurs, n'atteignent les surfaces extérieures de finition 19 et 20 que suivant des trajectoires tangentielles, et elles n'y déterminent qu'un dépôt d'épaisseur négligeable. En revanche, un dépôt épais, analogue à celui de la figure 2, est obtenu en 21 et 22 sur les faces latérales de contact des condensateurs.

Il en résulte, après schoopage, une séparation très aisée des différents étages de condensateurs, sans aucun risque d'entraînement ou d'arrachage de matériau. Il a été par ailleurs remarqué, lors de la mise en oeuvre du procédé de l'invention, que la suppression de ce risque entraînait l'économie des surfaces d'ancrage par des couches de finition à décalage alterné, suppression conduisant à une autre simplification du procédé.

Le déroulement des étapes de fabrication selon le procédé de l'invention s'établit alors comme suit :

On enroule sur la roue de grand diamètre, suivant l'une des solutions proposées précédemment, une couche de finition (1) en film non métallisé, suivant par exemple, 5 à 10 tours. Puis on enroule les deux films métallisés décalés l'un par rapport à l'autre, suivant le nombre de tours nécessaire pour obtenir la valeur de la capacité désirée du condensateur. On enroule à nouveau une couche de finition en film non métallisé suivant par exemple 5 à 10 tours.

Cela constitue un premier empilement dont l'un des bord a été aligné avec un des bords de la jante de la roue, déduction faite de l'épaisseur de schoopage.

On déplace alors la roue parallèlement à son axe de rotation d'une longueur de 0,5 à 2 mm par exemple, et on continue alors d'enrouler la couche de finition en film non métallisé suivant, par exemple, 5 à 10 tours. Cela constitue l'étape de départ d'un nouvel empilement qui sera réalisé comme le précédent. A la fin de ce deuxième empilement, on remplacera la roue à sa position initiale, comme pour le premier enroulement, et ainsi de suite.

Il a été vérifié que cette méthode permet, après l'opération de schoopage des tranches des empilements et après le traitement thermique de l'ensemble, une séparation circonférentielle aisée des différents empilements au niveau de leurs décalages.

Elle présente l'avantage économique de supprimer la consommation de la couche coupe-schoopage, et de récupérer le temps de sa mise en place, le temps de déplacement du montage portant la roue étant très rapide, puisqu'il s'agit d'un mouvement de translation de quelques millimètres.

Elle permet d'autre part, une simplification de la machine à enrouler puisque l'on supprime le dispositif distributeur de bande coupe-schoopage.

La figure 4 représente, suivant des variantes (a) (b) (c) (d) (e), des feuilles ou films de finition procurant un ancrage par un effet de crémaillère longitudinal. Il existe en effet, des cas de mise en oeuvre industrielle des condensateurs pavés, où un ancrage résiduel est souhaitable pour les dépôts de schoopage. Cependant, le procédé de l'art connu, qui fait appel à un effet de crémaillère de type radial, par décalage transversal alterné des films de finition, est compliqué, par suite de la nécessité de bobiner, comme on l'a vu, deux bandes différentes, et selon des étapes particulières.

L'invention comporte au contraire la mise en oeuvre d'un seul type de film de finition, portant latéralement des indentations réalisant un effet de crémaillère de type longitudinal.

Les variantes (a) (b) (c) (d) (e) de la figure 4 illustrent, de façon non limitative, des formes de contour assurant la fonction de crémaillère. Les bords peuvent avoir dans le sens longitudinal, la forme d'une ondulation, la forme d'une dent de scie symétrique, la forme d'une dent de scie non symétrique, la forme d'un créneau, la forme d'un trapèze, ou toutes combinaisons possibles de ces formes, l'essentiel étant que le film utilisé n'ait pas des bords rectilignes.

Les différentes formes de bords peuvent avoir une période de répétition longue ou courte, constante ou variable.

Les formes des deux bords peuvent être identiques, en phase ou non, ou non identiques.

Il est à remarquer que, dans le cas général où on bobine plusieurs spires de film de finition sur le condensateur, l'alignement exact des indentations perpendiculairement au plan des spires n'est pas réalisé, conduisant à une répartition aléatoire des reliefs d'ancrage.

Cela constitue un avantage supplémentaire par l'ancrage plus efficace procuré par une telle répartition.

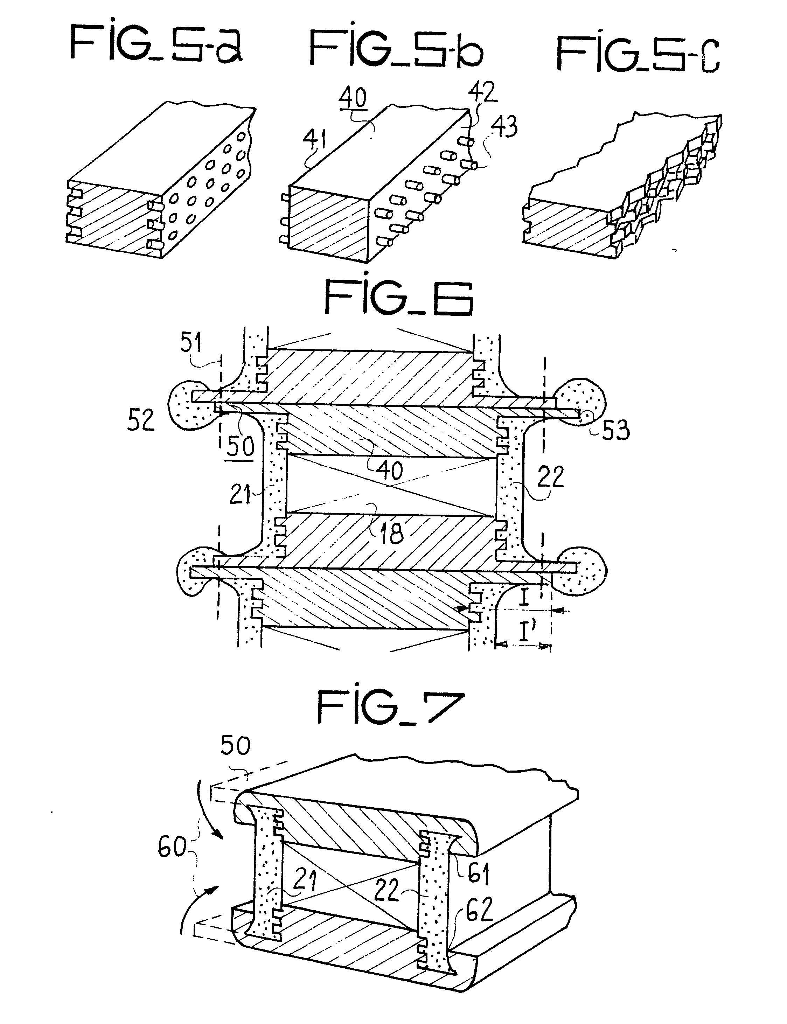

La figure 5 représente un autre mode de réalisation des couches de finition.

Suivant ce mode les couches séparées sont réunies en une seule bande de matériau continu 40, d'épaisseur égale à celle de l'ensemble des couches ou films minces mis en oeuvre dans les figures précédentes. Sur les faces latérales 41, 42 de la bande, des indentations 43 sont réalisées, par moulage ou usinage, en forme de crémaillères longitudinales, procurant le résultat recherché d'ancrage des couches de schoopage.

Les bords de cette bande de finition peuvent ne pas être lisses, mais présenter une certaine rugosité d'ancrage.

Ils pourront par exemple être en forme de créneaux longitudinaux, en forme de queues d'aronde longitudinales, ou de dents de scie longitudinales. Ils pourront être percés de trous ou posséder des tenons en relief de forme cylindrique par exemple, tronconique, conique ou parallélépipèdique à base rectangulaire, à base carrée, à base triangulaire ou toute autre forme, par exemple un "moletage" procurant un bon ancrage pour le schoopage.

La bande unique doit avoir pour largeur hors tout la largeur des films métallisés plus leur décalage. Son épaisseur est comprise entre 0,2 et 2 mm. Elle est réalisée en matériau plastique souple, compatible avec la température de traitement thermique par exemple, en polycarbonate, en polyester, en polypropylène. Son coefficient de retrait en fonction de la température, doit être voisin de celui des films métallisés utilisés pour la partie active du condensateur.

Le procédé d'enroulement est alors le suivant :

a) on dispose sur la roue (4) une première bande de finition, sur un tour complet moins quelques millimètres. Ce profilé est aligné avec l'un des bords de la jante et rendu solidaire de celle- ci ;

b) on aligne le premier film métallisé sur l'un des bords de la bande ;

c) on le colle et on coupe l'excédent ;

d) on aligne le deuxième film métallisé sur l'autre bord de la bande ;

e) on le colle et on coupe l'éxcédent ;

f) on enroule simultanément les deux films métallisés durant un nombre de tours prédéterminé, fonction de la valeur du condensateur à réaliser ;

g) on engage à vitesse lente, sans avoir coupé les films métallisés, une nouvelle bande de finition sur un tour moins quelques millimètres ;

h) on déplace latéralement la roue de 0,2 à 2 mm parallèlement à son axe, et on engage à vitesse lente une autre bande de finition sur un tour moins quelques millimètres ;

i) on recommence à (f) autant de cycles nécessaires pour arriver à un total de 10 empilements suivant la direction radiale.

Les opérations de séparation circonférentielle ont lieu entre deux bandes de finition adjacentes.

Ce procédé est très avantageux, car l'on n'a effectué les opérations d'alignement, de collage, de coupe qu'une seule fois au départ, alors que dans le procédé précédent il faillait coller, couper puis réaligner, coller à chaque feuille, à chaque changement de celles-ci.

D'autre part, les couches de finition sont réalisées en un seul tour, alors que dans le procédé précédent, ilfallait 5 à 10 tours.

Il est à noter que dans ce procédé, on ne coupe jamais les films métallisés, et les bandes de finition peuvent être engagées d'une manière automatique supprimant une grande partie de la main d'oeuvre à cette étape. Le procédé se prête à l'automatisation totale de la machine ; dès la première opération, la main d'oeuvre est limitée à une surveillance.

On obtient par ce procédé, une productivité maximale et une simplification de la machine à enrouler, puisqu'elle ne comporte plus que la roue, les deux dévidoirs de films métallisés et un distributeur automatique de bande de finition.

La figure 6 représente, suivant une coupe transversale, une variante avantageuse de la couche de finition de la figure 5, mise en oeuvre dans la pluralité d'empilage feuilletés réalisés par le procédé de la roue. Suivant cette variante, la face externe de la plaquette de finition présente un rebord en "surplomb" 50. La valeur L de ce rebord est avantageusement choisie en vue d'assurer le même rôle que le décalage latéral de la figure 3, c'est-à-dire interrompre ou couper les dépôts de schoopage 21, 22 et permettre une séparation aisée, et sans dégradation des étages.

Un sectionnement en 51, sur la partie externe du rebord, peut s'avérer utile pour faciliter la séparation lorsqu'un dépôt notable 52 de matériau de schoopage s'y est produit.

La figure 7 représente une mise en oeuvre avantageuse des plaquettes de finition 40 à rebords en surplomb de la figure 6. Suivant cette mise en oeuvre, les rebords 50, après leur sectionnement latéral indiqué plus haut, sont rabattus suivant les flèches 60. Le condensateur "pavé" obtenu présente alors des caractéristiques d'ancrage des contacts encore améliorées, associées à une meilleure étanchéité en 61 et 62 contre les dégradations extérieures, dues par exemple à l'humidité et la corrosion.

Il est à noter que, bien que les moyens de connexion à haute résistance mécanique procurés par l'invention puissent être réalisés par le procédé ne comportant pas d'étape de décalage latéral entre chaque étage de condensateurs, la combinaison de ce procédé avec la mise en oeuvre de plaquettes de finition à crémaillères longitudinales procure des résultats améliorés et fait partie du domaine de l'invention.

De même, bien que les modes de réalisation des condensateurs "pavés" selon l'invention soient particulièrement intéressants à mettre en oeuvre dans le cas du procédé de la "roue", les structures des condensateurs obtenus, même réalisées en éléments unitaires, sont particulièrement avantageuses, et sont comprises dans le domaine de l'invention.

15

## REVENDICATIONS

1. Condensateur électrique feuilleté à armatures planes, en forme de parallélépipède, avec deux faces principales, auxquelles sont parallèles d'une part un empilage respectivement alterné de couches conductrices constituant les armatures, et de couches isolantes constituant les diélectriques, et d'autre part deux plaquettes de finition externes, caractérisé en ce qu'il comporte des moyens de connexion à haute résistance mécanique, pour le raccordement en parallèle des armatures suivant deux groupes, moyens constitués par deux couches métalliques de connexion déposées sur deux autres faces parallèles et sur les bords correspondants des plaquettes de finition, ces bords portant des reliefs d'accrochage, en forme de crémaillères orientées parallèlement aux faces principales.

2. Condensateur selon la revendication 1, caractérisé en ce que les plaquettes de finition sont constituées d'une pluralité de couches en forme de feuilles, empilées les unes sur les autres, dont lesdits bords portent des reliefs d'accrochage en forme de crémaillères orientées parallèlement aux faces principales.

3. Condensateur selon la revendication 2, caractérisé en ce que les plaquettes de finition comportent, sur leurs faces principales externes, une couche supplémentaire dont les bords sont en saillie, par rapport à ceux des plaquettes, d'une longueur au moins égale à l'épaisseur des couches métalliques de connexion.

4 Condensateur selon la revendication 3, caractérisé en ce que la longueur en saillie est supérieure à l'épaisseur des couches métalliques de connexion, la partie excédentaire étant rabattue sur les deux autres faces parallèles du condensateur.

5 Procédé de fabrication d'un condensateur électrique selon l'une des revendications précédentes, caractérisé en ce qu'il comporte les étapes suivantes :

a) sur la jante extérieure d'une roue cylindrique, mise en place d'une plaquette de finition en forme de bande, sur un tour complet ;

b) mise en place d'un film de matériau diélectrique recouvert d'une couche métallique, avec coïncidence d'un de ses bords avec l'un des bords de la plaquette de finition ;

c) mise en place d'un autre film de matériau diélectrique recouvert d'une couche métallique, avec coïncidence d'un de ses bords avec l'autre des bords de la plaquette de finition ;

d) enroulement simultané des deux films, suivant un nombre de tours déterminé par la valeur de la capacité à atteindre ;

e) mise en place d'une nouvelle plaquette de finition en forme de bande ;

f) translation de la roue, parallèlement à son axe, d'une distance comprise entre 0,2 et 2 mm ;

g) nouveau cycle d'étapes de fabrication de (a) à (f) ;

h) réalisation des couches métalliques de connexion sur les autres faces parallèles et les bords correspondants des plaquettes de finition ;

i) séparation des étages de condensateurs, par séparation au niveau de deux plaquettes de finition adjacentes.

6. Procédé de fabrication d'un condensateur électrique selon la revendication 4, caractérisé en ce qu'il comporte une étape supplémentaire de rabattement respectif de chaque partie excédentaire de la couche supplémentaire de finition sur chacune des autres faces parallèles du condensateur.

0011033

# FIG_1

# FIG_2

# FIG_3

# FIG_4·a      FIG_4·b      FIG_4·C

# FIG_4·d      FIG_4·e

# FIG_5-a  FIG_5-b  FIG_5-c

40
41
42
43

# FIG_6

51

52

50

21

40

22

53

18

I

I'

# FIG_7

50

60

21    22

61

62

**RAPPORT DE RECHERCHE EUROPEENNE**

Office européen
des brevets

| | DOCUMENTS CONSIDERES COMME PERTINENTS | | CLASSEMENT DE LA DEMANDE (Int. Cl.) |
|---|---|---|---|
| Catégorie | Citation du document avec indication, en cas de besoin, des parties pertinentes | Revendication concernee | |
| A | DE - A - 2 424 368 (SIEMENS AG)<br>* Page 6, alinéa 4; figure 5 *<br>-- | 1 | H 01 G 4/30 |
| A | DE - A - 2 451 863 (E. ROEDERSTEIN)<br>* Revendications; figures 1-3 *<br><br>---- | 1 | |

**DOMAINES TECHNIQUES RECHERCHES (Int. Cl.)**

H 01 G 4/30
13/00
1/147

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 29-01-1980 | VAN REETH |

OEB Form 1503.1 06.78